# EUROPÄISCHE PATENTSCHRIFT

(11) **EP 2 179 488 B1**
(45) Veröffentlichungstag und Bekanntmachung des Hinweises auf die Patenterteilung: **02.05.2012**
(21) Anmeldenummer: 08715860.6
(22) Anmeldetag: 19.02.2008
(51) Int. Cl.: H02K 1/14, H02K 15/02

(54) **Stator für Elektromotor**
Stator for electric motor
Stator pour moteur électrique

(30) Priorität: 12.07.2007 DE 102007032872
(43) Veröffentlichungstag der Anmeldung: 28.04.2010
(73) Patentinhaber: CPM Compact Power Motors GMBH, 85774 Unterföhring (DE)
(72) Erfinder: WINDECKER, Nico, 85604 Zorneding (DE); LEIBER, Thomas, 81675 München (DE); UNTERFRAUNER, Valentin, I-39040 Feldthurns (IT)
(74) Vertreter: Lenzing Gerber Stute
(86) Internationale Anmeldenummer: PCT/EP2008/001276
(87) Internationale Veröffentlichungsnummer: WO 2009/006951

(56) Entgegenhaltungen:
- WO-A-00/72426
- DE-A1- 1 763 506
- DE-A1- 10 259 090
- DE-A1- 19 934 858
- JP-A- 7 245 895
- JP-A- 8 098 440
- JP-A- 61 180 563
- JP-A- 2000 341 897
- JP-A- 2001 161 048
- JP-A- 2003 164 089
- US-A- 6 081 059
- US-A1- 2003 155 834
- US-A1- 2005 242 670

## Beschreibung

Die vorliegende Erfindung eine Ausführung eines Stator für eine Drehfeldmaschine nach dem Oberbegriff des Anspruch 1.

### Stand der Technik:

Außenläufermotoren nach dem Stand der Technik weisen einen Stator auf, der mit Spulen bewickelt ist, sowie einen Rotor mit eingebetteten oder aufgeklebten Magneten. In der Regel sind Polschuhe vorgesehen, um zum einem das Rastmoment des Motors zu reduzieren, zum anderen um eine Fixierung der Spulen im Stator zu gewährleisten. Auch wirken sich Polschuhe vorteilhaft auf die magnetischen Eigenschaften aus, da der Fluss der Permanentmagnete besser in den Stator geleitet werden kann.

Die Vorteile der Polschuhe führen zu Nachteilen bei der Bewicklung des Stators. Am weitesten verbreitet ist die Nadel- oder Flyerwicklung. Die Nadelwicklung erfordert eine Nadel, die in der Nut des Jochzahnes geführt ist und in der Regel eine Breite des 2,5-3fachen des bewickelten Drahtes hat. Insbesondere bei Motoren für den Niederspannungsbereich sind dicke Drähte erforderlich, um eine geringe Windungszahl und Induktivität zu erreichen. Aufgrund der erforderlichen Breite der Nadel des Nadelwicklers geht beim Bewickeln des Stators ein Raum für die Bewicklung verloren, der dem Durchmesser der Nadel entspricht. Daher können durch die Nadelwickeltechnik in der Regel nur geringe Kupferfüllfaktoren von ca. 30-35% erreicht werden. Um bessere Füllfaktoren zu erreichen, werden Einzelzähne eingesetzt, die Schwalbenschwänze aufweisen und mit einen Statorring formschlüssig verbunden sind. Die Einzelzähne werden dann einzeln bewickelt und in den Stator eingeschoben. Der Nachteil der Einzelzähne ist der hohe Handlingaufwand. Außerdem ist bei Einzelzahnwicklungen ein Stanzgitter erforderlich, mit dem die Spulen verschaltet werden. Das Stanzgitter ist ein Kostentreiber und sollte daher vereinfacht werden.

Um den Kupferfüllfaktor zu erhöhen ist aus der EP 0871282 A1 ist einteiliger Stator bekannt, der Biegezonen im Bereich des Rückschlusses aufweist. Dies ermöglicht die Bewicklung des Stators in geraden Zustand. Nach der Bewicklung wird der Stator in eine Form gebogen. Diese Technik hat den Vorteil des geringen Materialverschnitts und ermöglicht bei Innenläufermotoren einen hohen Kupferfüllfaktor. Bei Außenläufermotoren (Fig. 49, EP0871282A1) ist jedoch kein hoher Füllfaktor erreichbar. Außerdem ist die Polschuhgestaltung sehr aufwändig gelöst, um das Aussetzen von Einzelspulen mit Isolierungskörper, wie in den Figuren 13 und 14 der EP 0871282 A1 dargestellt, zu ermöglichen.

Aus US2003/0155834 ist ein Elektromotor bekannt, bei dem die vereinzelt ausgebildeten Pole Wicklungsträger aus Kunststoff formschlüssig einliegen und die Halter zweiteilig ausgebildet sind.

Aus JP2000-341897 ist ein Stator für Innenläufer bekannt, der durch gestanzte Bleche gebildet ist. Der äußere Statorring ist mit den Polen einstückig ausgebildet. Auf die Pole werden vereinzelte Wicklungsträger mit den zuvor aufgewickelten Spule aufgeschoben, wobei die Wicklungsträger in an den Polen angeformten Nasen einrasten.

### Aufgabe und Ausführung der Erfindung:

Ziel der Erfindung ist es, einen Stator für einen Elektromotor bereitzustellen, mit dem zum einen ein hoher Füllfaktor erreicht werden kann und zum anderen der Handlingaufwand und die Kosten reduziert werden können. Weiter soll der Statoraufbau sich vorteilhaft auf das Rastmoment des Motors auswirken und somit die Geräuschbildung reduzieren.

Diese Aufgabe wird erfinderisch durch einen zweiteiligen Statoraufbau mit den Merkmalen des Anspruch 1 und durch das Verfahren des Anspruchs 10 gelöst und hat folgende Vorteile:
- optimale Polschuhgestaltung in Hinblick auf Minimierung des Rastmoments;
- hohe Flexibilität durch Einsatz von Einzelspulen bzw. alternativ gesamte Statorbewicklung; Erreichen eines hohen Füllfaktors für Außen- und Innenläufermotoren;
- geringer Materialverschnitt und Handlingaufwand;
- geringe Toleranzempfindlichkeit der Statorteile,
- Reduzierung des Nebenschlusses durch Aussparungen;
- geringe Herstellungskosten.

Weitere vorteilhafte Ausgestaltungen dieses Stators und eines entsprechenden Elektromotors ergeben sich durch die Merkmale der Unteransprüche.

Nachfolgend werden verschiedene Ausgestaltungen des erfindungsgemäßen Antriebs anhand von Zeichnungen näher erläutert.

Es zeigen:
- Fig. 1:: Statoraufbau einer Drehfeldmaschine gemäß Stand der Technik;
- Fig. 2:: Linearstator aus einer Kunststoffleiter mit eingesetzten Einzelzähnen;
- Fig. 3: Wickelwerkzeugaufnahme für Stator eines Außenläufermotors;
- Fig. 3a: Wickelwerkzeugaufnahme für Stator eines Innenläufermotor, die nicht Teil der Erfindung ist;
- Fig. 4: zusammengefügter Stator eines Außenläufermotors mit Kunststoffumspritzung.

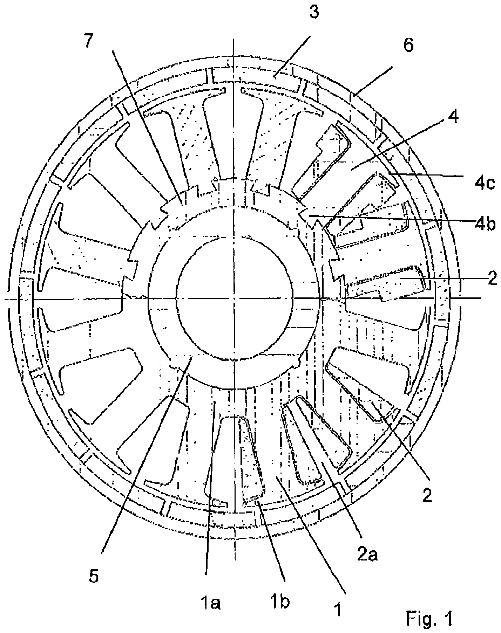

Fig. 1 zeigt einen Querschnitt durch einen Statoraufbau gemäß dem Stand der Technik. Im unteren Teil des Bildes ist ein einteiliger Stator gezeigt, der Pole 1, eine Polschuhausbildung 1b und einen Querflussbereich 1a aufweist. Auf den Stator sind die Erregerspulen 2 gewickelt. Der Totraum 2a, der nicht bewickelt werden kann, liegt zwischen den Polen 1 und ergibt sich aus der Nadelführung und der Breite der Nadel des Nadelwicklers. Der durch die Erregerspulen 2 erzeugt Fluss schließt sich über die Permanentmagnete 3 und den Rotor 6. Im oberen Teil des Bildes ist eine Alternative zur unteren Statorausgestaltung dargestellt. Dort ist der Stator mehrteilig und besteht aus einem Statorring 7 und mehreren Einzelpolen 4, die einzeln mit Spulen 2 bewickelt sind. Die Einzelpole 4 werden über einen Schwalbenschwanz 4b im Statorring 7 fixiert. In der Regel werden die Statorpakete über ein Presspassung und Verstemmen zusammengehalten. Bei dieser Statorausführung sind hohe Anforderungen an die Maßhaltigkeit der Blechpakete für die Einzelpole 4 und den Ring 7 zu stellen, wodurch die Fertigungskosten hoch sind. Der Stator ist mit dem Träger 5, dass ein Teil des Motorgehäuses ist, über Nuten oder über eine Presspassung verbunden.

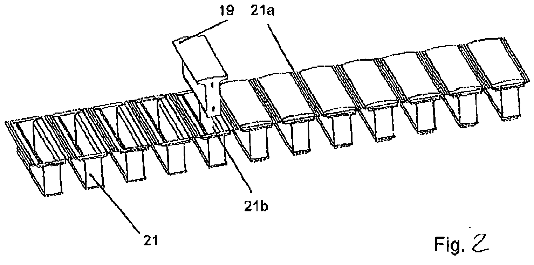

Die Fig. 2 zeigt eine Ausführungsform bei der die einzelnen Zähne 19 in ein vorgefertigtes Kunststoffteil in Form einer Leiter 21 eingelegt werden. Die Kunststoffleiter 21 dient zum einen als Statorisolator, zum anderen weist sie eine biegeweiche Zone 21a auf. Die Gestaltung der Kunststoffleiter 21 ermöglicht ein Einklippsen der Zähne 19 in Taschen 21b. .Das Einklippsen erfolgt mittels nicht dargestellter Verrastungen, die durch entsprechende Hinterschnitte, Vorsprünge und/oder Zungen an den Teilen 19 und 21 ausgebildet sein können.

Die Kunststoffverbindung hat den Vorteil, dass nur Statorzähne 19 gefertigt werden müssen und keine Blechstreifen für die Verbindungsstege der Pole. So ist die Herstellung der Zähne sowie der Statorpaketierprozess deutlich kostengünstiger. Nachteilig sind die erhöhten Anforderungen an die Formschlussverbindung des Biegestators mit dem Statorring 7,9, da der Biegestator durch die Kunststoffverbindungen nicht effizient zusammengehalten werden kann.

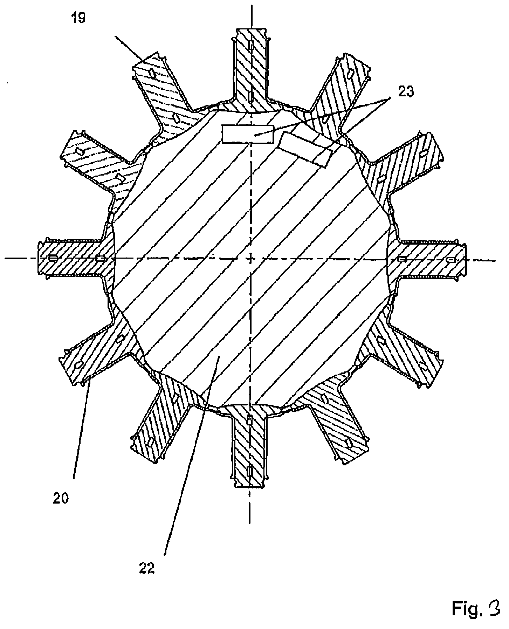

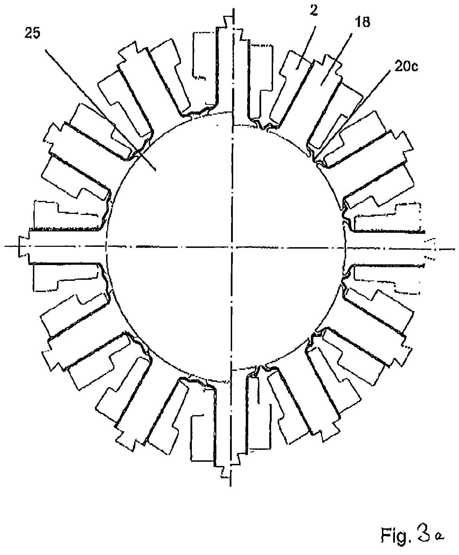

Der Stator kann dann durch eine Linearwickelmaschine bewickelt oder auf ein entsprechendes Statorwickelwerkzeug zurückgebogen und bewickelt werden. Daher muss die Biegezone 20b, 20c, 21a derart ausgeführt werden, dass eine erste Biegung auf den Träger der Wickelmaschine sowie eine zweite Biegung in entgegengesetzter Richtung zum Einsatz in den Statorträgerring gewährleistet werden kann. Der auf dem Wickelwerkzeug 22 befestigte Stator ist in Fig. 3 dargestellt. Die Zähne des rückgebogenen Stators werden entweder mit Magnetkraft, z.B. mit Permanentmagneten 23, zum Bewickeln angezogen und gegebenenfalls über eine zusätzliche, nicht dargestellte, Spannvorrichtung im Wickelwerkzeug 22 fixiert.

In Fig. 3a ist ein entsprechendes Wickelwerkzeug für den Stator eines Innenläufermotors dargestellt. Um einen sehr guten Füllfaktor zu erreichen, ist es sinnvoll, dass der Stator 18 über einen Wickeldorn 25 gespreizt wird. Die Kunststoffverbindungsstege, die vorteilhaft über eine dehnbare Schlaufe 20c ausgeführt sind, werden dann gedehnt, wodurch der entsprechende Freigang für die Nadel des Nadelwicklers geschaffen wird. Hierdurch kann der Füllfaktor beim automatisierten Bewickeln vorteilhaft erhöht werden. Auch ist eins elliptische Gestaltung des Wickeldornes möglich, der beim Bewickeln gedreht wird. Dadurch wird ebenfalls die Verbindungszone zwischen den Zähnen gestreckt und es entsteht ein entsprechender Freigang für die Nadelführung.

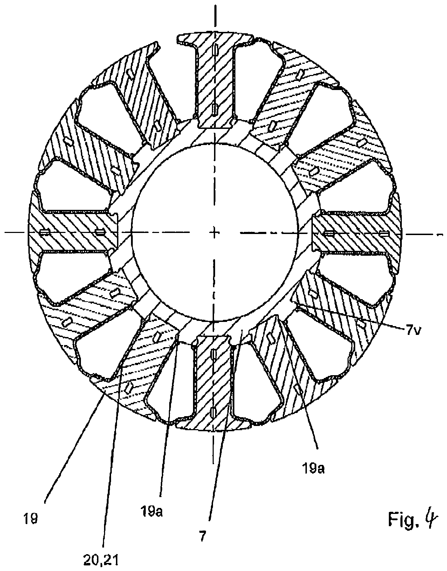

Nachdem die in eine Kunststoffleiter 21 eingebetteten Einzelzähne 19 bewickelt sind, wird der Biegestator über eine geeignete Vorrichtung formschlüssig mit dem Statorring 7 verbunden. Hierzu werden die Zähne 19 mit ihren Enden 19a in die entsprechenden Ausnehmungen des Statorrings 7 in axialer Richtung eingeschoben. Der zusammengesetzte Stator ist in Fig. 4 dargestellt.

## Patentansprüche

1. Stator eines Außenläufermotors mit mehreren Erregerspulen (2), wobei die die Erregerspulen (2) tragenden Jochzähne (19z) der Pole (19) mit ihren freien Enden (19a) mit einem Statorinnenring (7) verbunden sind, und dass die Pole (19) und/oder Polschuhe (19z) mittels aus Kunststoff gebildeter Verbindungsbereiche (20b, 21a, 24) miteinander in Verbindung sind , wobei die Verbindungsbereiche (20b, 21a, 24) biegsam und/oder federnd ausgebildet sind, **dadurch gekennzeichnet, dass** die Pole (19) in Taschen (21b) eines einstückigen Kunststoffteils (21) einliegen und die Pole (19) mittels Verrastungen in den Taschen (21b) befestigt sind.

2. Stator nach Anspruch 1, **dadurch gekennzeichnet, dass** die Pole (19) und/oder Polschuhe (19z) mittels aus Kunststoff gebildeter Verbindungsbereiche (20b, 21a, 24) miteinander in Verbindung sind.

3. Stator nach Anspruch 1 oder 2, **dadurch gekennzeichnet, dass** die Kunststoffummantelung (20, 21) Vorsprünge zur Fixierung der Statorwicklung (20a) aufweist, die insbesondere durch axiale Stege bzw. Vorsprünge (20d) gebildet sind.

4. Stator nach einem der Ansprüche 1 bis 3, **dadurch gekennzeichnet, dass** die Verbindungsbereiche Knick- oder Beigebereiche (20c) aufweisen oder als Knick- oder Beigebereiche ausgebildet sind.

5. Stator nach einem der vorhergehenden Ansprüche, **dadurch gekennzeichnet, dass** die Jochzähne (19z) der Pole (19) mit ihren freien Enden (19a) in Nuten des Statorrings (7) einliegen.

6. Stator nach Anspruch 5, **dadurch gekennzeichnet, dass** die Jochzähne (19z) einen Polschuh, einen Zahnhals sowie einen Schwalbenschwanz aufweisen, wobei der Schwalbenschwanz so breit, insbesondere maximal so breit, ist wie der Zahnhals und der Polschuh auf dem Kunststoffträger (21) aufliegt, wobei der Schwalbenschwanz aus dem Kunststoffträger (21) herausragt.

7. Stator nach einem der Ansprüche 1 bis 6, **dadurch gekennzeichnet, dass** die Jochzähne (19z) der Pole (8, 19) mit ihren freien Enden (19a) in Nuten des Statorinnenrings (7) einliegen.

8. Stator nach einem der Ansprüche 1 bis 6, **dadurch gekennzeichnet, dass** der Statorinnenring (7) radiale vorsprünge aufweist, die in entsprechende Aussparungen, insbesondere Nuten der freien Enden der Jochzähne eingreifen.

9. Stator nach einem der vorhergehenden Ansprüche, **dadurch gekennzeichnet, dass** der Verbindungsbereich (20b, 21a) zwischen den Polschuhen (19s) dünnwandig ausgebildet ist.

10. Verfahren zur Herstellung eines Stators nach einem der Ansprüche 1 bis 9, **dadurch gekennzeichnet, dass** die Jochzähne (19z) in Taschen eines Kunststoffteils (21) eingesetzt und verrastet werden, wonach dann die Statorwicklung auf die Polzähne (19z) aufgebracht wird und in einem nachfolgenden Arbeitsschritt die Pole auf einen Statorring (7) aufgeschoben werden.

11. Verfahren zur Herstellung eines Stators nach Anspruch 10, **dadurch gekennzeichnet, dass** vor dem Aufwickeln der Statorwicklung (20a) der Stator derart gebogen wird, dass ein größerer Freiraum zwischen den Jochzähnen (18c; 19z) entsteht.

12. Verfahren zur Herstellung eines Stators nach Anspruch 11, **dadurch gekennzeichnet, dass** der gebogene Stator an einem Wickeldorn angelagert, insbesondere mittels magnetischen Kräften (23) an dem Wickeldorn (22) gehalten wird.

13. Verfahren zur Herstellung eines Stators nach Anspruch 11 oder 12, **dadurch gekennzeichnet, dass** der Wickeldorn (22) den Stator während des Wickelprozesses radial aufspreizt, wobei die Verbindungsbereiche (20b, 20c, 21a) dehnbar ausgebildet sind, damit die Pole beim Aufspreizen nicht deformiert werden.

14. Drehfeldmaschine mit einem Stator nach einem der vorhergehenden Ansprüche.

15. Drehfeldmaschine nach Anspruch 14, **dadurch gekennzeichnet, dass** die Drehfeldmaschine einen mit Permanentmagneten bestückten Rotor aufweist.

## Claims

1. Stator of an external rotor motor, having a plurality of exciter coils (2), the yoke teeth (19z) of the poles (19) that carry the exciter coils (2) being connected to an internal stator ring (7) with the free ends (19a) thereof, and the poles (19) and/or the pole shoes (19z) being connected to each other by means of connection regions (20b, 21a, 24) which are produced from plastics material, the connection regions (20b, 21a, 24) being constructed in a flexible and/or resilient manner, **characterised in that** the poles (19) rest in pockets (21b) of an integral plastics member (21) and the poles (19) are secured in the pockets (21b) by means of locking members.

2. Stator according to claim 1, **characterised in that** the poles (19) and/or pole shoes (19z) are connected to each other by means of connection regions (20b, 21a, 24) produced from plastics material.

3. Stator according to claim 1 or 2, **characterised in that** the plastics covering (20, 21) has projections which are for fixing the stator winding (20a) and which are formed in particular by axial webs or projections (20d).

4. Stator according to any one of claims 1 to 3, **characterised in that** the connection regions have folded or bent regions (20c) or are constructed as folded or bent regions.

5. Stator according to any one of the preceding claims, **characterised in that** the yoke teeth (19z) of the poles (19) rest with the free ends (19a) thereof in grooves of the stator ring (7).

6. Stator according to claim 5, **characterised in that** the yoke teeth (19z) have a pole shoe, a tooth neck and a dovetail, the dovetail being as wide, in particular at a maximum as wide, as the tooth neck and the pole shoe resting on the plastics carrier (21), the dovetail protruding from the plastics carrier (21).

7. Stator according to any one of claims 1 to 6, **characterised in that** the yoke teeth (19z) of the poles (8, 19) rest with the free ends (19a) thereof in grooves of the internal stator ring (7).

8. Stator according to any one of claims 1 to 6, **characterised in that** the internal stator ring (7) has radial projections which engage in corresponding recesses, in particular grooves of the free ends of the yoke teeth.

9. Stator according to any one of the preceding claims, **characterised in that** the connection region (20b, 21a) is constructed with thin walls between the pole shoes (19s).

10. Method for producing a stator according to any one of claims 1 to 9, **characterised in that** the yoke teeth (19z) are inserted and locked in pockets of a plastics member (21), after which the stator winding is placed onto the pole teeth (19z) and in a subsequent operating step the poles are pushed onto a stator ring (7).

11. Method for producing a stator according to claim 10, **characterised in that**, before the stator winding (20a) is wound up, the stator is bent in such a manner that a larger free space is produced between the yoke teeth (18c; 19z).

12. Method for producing a stator according to claim 11, **characterised in that** the bent stator adjoins a winding mandrel, in particular is retained on the winding mandrel (22) by means of magnetic forces (23).

13. Method for producing a stator according to claim 11 or 12, **characterised in that** the winding mandrel (22) radially expands the stator during the winding process, the connection regions (20b, 20c, 21a) being constructed so as to be expandable so that the poles do not become deformed during expansion.

14. Induction machine having a stator according to any one of the preceding claims.

15. Induction machine according to claim 14, **characterised in that** the induction machine has a rotor which is provided with permanent magnets.

## Revendications

1. Stator d'un moteur à rotor ou induit extérieur, comprenant plusieurs bobines d'excitation (2), les dents de culasse d'inducteur (19z) des pôles (19), qui portent les bobines d'excitation (2), étant reliées par leurs extrémités libres (19a) à un anneau intérieur de stator (7), et les pôles (19) et/ou les cornes polaires (19z) étant reliés mutuellement au moyen de zones de liaison (20b, 21a, 24) réalisées en matière plastique, ces zones de liaison (20b, 21a, 24) étant réalisées de manière à être flexibles et/ou élastiques,
**caractérisé en ce que** les pôles (19) sont placés dans des poches (21b) d'une pièce en matière plastique (21) d'un seul tenant, et les pôles (19) sont fixés par des moyens d'encliquetage dans les poches (21b).

2. Stator selon la revendication 1, **caractérisé en ce que** les pôles (19) et/ou les cornes polaires (19z) sont reliés mutuellement au moyen des zones de liaison (20b, 21a, 24) réalisées en matière plastique.

3. Stator selon la revendication 1 ou la revendication 2, **caractérisé en ce que** le gainage en matière plastique (20, 21) présente des protubérances pour la fixation de l'enroulement de stator (20a), qui notamment sont formées par des nervures ou protubérances axiales (20d).

4. Stator selon l'une des revendications 1 à 3, **caractérisé en ce que** les zones de liaison présentent des zones de pliage ou de flexion (20c), ou bien sont réalisées en tant que zones de pliage ou de flexion.

5. Stator selon l'une des revendications précédentes, **caractérisé en ce que** les dents de culasse d'inducteur (19z) des pôles (19) sont placées, avec leurs extrémités libres (19a), dans des rainures de l'anneau de stator (7).

6. Stator selon la revendication 5, **caractérisé en ce que** les dents de culasse d'inducteur (19z) présentent une corne polaire, un goulot de dent ainsi qu'une queue d'aronde, la queue d'aronde étant de la largeur, notamment au maximum de la largeur du goulot de dent, et la corne polaire reposant sur le support en matière plastique (21), la queue d'aronde faisant quant à elle saillie hors du support en matière plastique (21).

7. Stator selon l'une des revendications 1 à 6, **caractérisé en ce que** les dents de culasse d'inducteur (19z) des pôles (8, 19) sont placées, avec leurs extrémités libres (19a), dans des rainures de l'anneau intérieur de stator (7).

8. Stator selon l'une des revendications 1 à 6, **caractérisé en ce que** l'anneau intérieur de stator (7) présente des protubérances radiales, qui s'engagent dans des évidements correspondants, notamment des rainures, des extrémités libres des dents de culasse d'inducteur.

9. Stator selon l'une des revendications précédentes, **caractérisé en ce que** la zone de liaison (20b, 21a) est réalisée en paroi mince entre les cornes polaires (19s).

10. Procédé de fabrication d'un stator selon l'une des revendications 1 à 9, **caractérisé en ce que** l'on insère les dents de culasse d'inducteur (19z) dans des poches d'une pièce en matière plastique (21) et on les y fixe par encliquetage, on réalise ensuite l'enroulement de stator sur les dents polaires (19z), et lors d'une étape de travail suivante, on engage les pôles sur un anneau de stator (7).

11. Procédé de fabrication d'un stator, selon la revendication 10, **caractérisé en ce qu'**avant le bobinage de l'enroulement de stator (20a), le stator est cintré de manière à ce qu'il se forme un espace libre plus grand entre les dents de culasse d'inducteur (18c; 19z).

12. Procédé de fabrication d'un stator, selon la revendication 11, **caractérisé en ce que** le stator cintré est monté sur un mandrin de bobinage, notamment maintenu au moyen de forces magnétiques (23) sur le mandrin de bobinage (22).

13. Procédé de fabrication d'un stator, selon la revendication 11 ou la revendication 12, **caractérisé en ce que** le mandrin de bobinage (22) produit une expansion radiale du stator pendant le processus de bobinage, les zones de liaison (20b, 20c, 21a) étant d'une configuration extensible pour que les pôles ne soient pas déformés lors de l'expansion.

14. Machine à champ tournant comprenant un stator selon l'une des revendications précédentes.

15. Machine à champ tournant selon la revendication 14, **caractérisée en ce que** la machine à champ tournant comprend un rotor ou induit équipé d'aimants permanents.
